# EUROPEAN PATENT APPLICATION

(11) **EP 4 668 976 A1**
(43) Date of publication of application: **24.12.2025**
(21) Application number: 23922000.7
(22) Date of filing: 17.02.2023
(51) Int. Cl.: H04W 72/231

(54) **FRAME TRANSMISSION METHOD AND APPARATUS, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); HE, Chuanfeng, Dongguan, Guangdong 523860 (CN); XU, Weijie, Dongguan, Guangdong 523860 (CN)
(74) Representative: Grassi, Stefano
(86) International application number: PCT/CN2023/076894
(87) International publication number: WO 2024/168858

(57) **Abstract**

The embodiments of the present disclosure provide a frame transmission method and apparatus, and a communication device. The method comprises: a first device sending or receiving a MAC frame, wherein the MAC frame has a first frame structure, and the first frame structure is different from conventional frame structures; and the first device is a communication device based on environmental energy.

## Description

### TECHNICAL FIELD

The embodiments of the present disclosure relate to the technical field of wireless communication, and particularly relate to a frame transmission method, a frame transmission device, and a communication device.

### BACKGROUND

The energy required for the operation of the communication device based on environmental energy mainly comes from the environment. Compared with conventional communication device, this type of communication device has some characteristics, such as short working duration, most of the transmitted services are small packet data, and low capabilities, etc. In view of this, if the communication device based on environmental energy continues to use the frame structure used by the conventional communication device, the communication device based on environmental energy may cause problems such as excessive energy consumption, low transmission efficiency, and even failure to transmit normally.

### SUMMARY

The embodiments of the present disclosure provide a frame transmission method and a frame transmission device, a communication device, a chip, a computer-readable storage medium, a computer program product, and a computer program.

The frame transmission method according to the embodiment of the present disclosure includes the following operations.

A first device sends or receives a media access control (MAC) frame, wherein the MAC frame has a first frame structure, and the first frame structure is different from a conventional frame structure, and the first device is a communication device based on environmental energy.

The frame transmission device according to the embodiment of the present disclosure includes a communication unit.

The communication unit is configured to send or receive a MAC frame, wherein the MAC frame has a first frame structure, the first frame structure is different from a conventional frame structure, and the first device is a communication device based on environmental energy.

The communication device according to the embodiment of the present disclosure includes a processor and a memory. The memory is used for storing a computer program, wherein the processor is configured for invoking and executing the computer program stored in the memory to perform the frame transmission method described above.

The chip according to the embodiment of the present disclosure is used for performing the frame transmission method described above.

Specifically, the chip includes a processor for invoking and executing a computer program from a memory to enable a device on which the chip is mounted to perform the frame transmission method described above.

The computer-readable storage medium according to the embodiment of the present disclosure is used for storing a computer program that causes a computer to perform the frame transmission method described above.

The computer program product according to the embodiment of the present disclosure includes a computer program instruction that causes a computer to perform the frame transmission method described above.

The computer program according to the embodiment of the present disclosure causes a computer to perform the frame transmission method described above when the computer program is run on the computer.

With the above technical solution, the first device is a communication device based on environmental energy, and the MAC frame sent or received by the first device has a first frame structure, and the first frame structure is different from the conventional frame structure. Compared with the conventional frame structure, the first frame structure is simpler and can be understood as a minimalist frame structure. This frame structure is suitable for communication device based on environmental energies and can avoid the problems such as excessive energy consumption, low transmission efficiency, and even failure to transmit normally of communication device based on environmental energies.

### BRIEF DESCRIPTION OF THE DRAWINGS

The accompanying drawings described herein are intended to provide a further understanding of the present disclosure, and constitute a part of the present disclosure, and the schematic embodiments of the present disclosure and the description thereof are intended to explain the present disclosure, and do not constitute an undue limitation of the present disclosure. In the accompanying drawings:
FIG. 1 is an architecture diagram of a communication system applied to an embodiment of the present disclosure;
FIG. 2 is an architecture diagram of another communication system applied to an embodiment of the present disclosure;
FIG. 3 is a schematic diagram of a PPDU structure;
FIG. 4 is a schematic diagram of a conventional structure of a MAC frame;
FIG. 5 is a schematic diagram of a conventional structure of a frame control field;
FIG. 6 is a schematic diagram of a conventional frame structure;
FIG. 7 is a schematic flowchart of a frame transmission method according to an embodiment of the present disclosure;
FIG. 8-1 is a first schematic diagram of a structure of a MAC frame according to an embodiment of the present disclosure;
FIG. 8-2 is a second schematic diagram of a structure of a MAC frame according to an embodiment of the present disclosure;
FIG. 8-3 is a third schematic diagram of a structure of a MAC frame according to an embodiment of the present disclosure;
FIG. 9 is a schematic diagram of a frame control field according to an embodiment of the present disclosure;
FIG. 10 is a schematic diagram of a structural composition of a frame transmission device according to an embodiment of the present disclosure;
FIG. 11 is a schematic structural diagram of a communication device according to an embodiment of the present disclosure; and
FIG. 12 is a schematic structural diagram of a chip according to an embodiment of the present disclosure.

### DETAILED DESCRIPTION

Hereinafter, the technical solutions in the embodiments of the present disclosure will be described with reference to the accompanying drawings in the embodiments of the present disclosure, and it is apparent that the described embodiments are a part of the embodiments of the present disclosure, rather than all of the embodiments. Based on the embodiments in the present disclosure, all other embodiments obtained by those skilled in the art without creative work fall within the scope of protection of the present disclosure.

The technical solution of the embodiment of the present disclosure can be applied to various communication systems, such as a wireless fidelit (WiFi) system, a 3rd generation partnership project (3GPP) system, and the like.

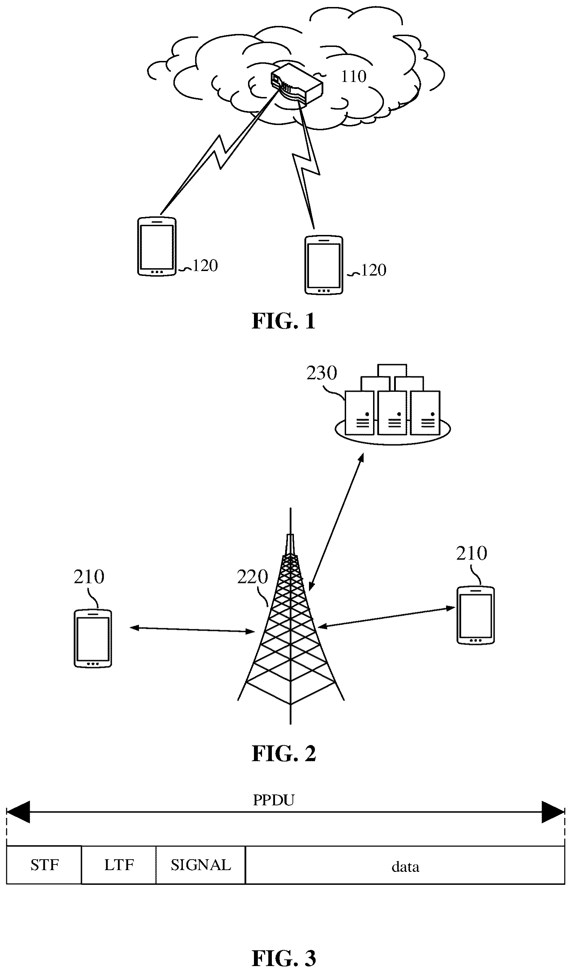

FIG. 1 is an example of a communication system architecture applied to an embodiment of the present disclosure.

As shown in FIG. 1, the communication system may include an access point (AP) 110, and a station (STA) 120 that accesses the network through the AP 110. In some scenarios, the AP 110 may be referred to as an AP STA, i.e., the AP 110 is also a STA in a sense. In some scenarios, the STA 120 may be referred to as a non-AP STA. In some scenarios, the STA 120 may include an AP STA and a non-AP STA. The communication in the communication system may include a communication between the AP 110 and the STA 120, or a communication between the STA 120 and the STA 120, or a communication between the STA 120 and a peer STA, the peer STA may refer to a device communicating with the opposite end of the STA 120, for example, the peer STA may be an AP or a non-AP STA.

The AP 110 can be used as a bridge connecting a wired network and a wireless network, its main function is to connect various wireless network clients together and then access the wireless network to Ethernet. The AP 110 may be a terminal device (such as a mobile phone) or a network device (such as a router) with a WiFi chip.

It should be noted that the role of the STA 120 in the communication system is not absolute, that is, the role of the STA 120 in the communication system can be switched between the AP and the STA. For example, in some scenarios, when the mobile phone is connected to the route, the mobile phone is an STA, and when the mobile phone is a hotspot for other mobile phones, the mobile phone acts as an AP.

In some embodiments, the AP 110 and the STA 120 may be devices applied in the internet of vehicles, internet of things nodes, sensors, etc. in the internet of things (IoT), smart cameras, smart remote controllers, smart water meters, etc. in smart homes, and sensors, etc. in smart cities.

In some embodiments, the AP 110 may be a device that supports the 802.11 be standard. The AP may be a device supporting various current and future 802.11 family WLAN standards such as 802.11 ax, 802.11 ac, 802.11 n, 802.11 g, 802.11 b, and 802.11 a. In some embodiments, the STA 120 may support the 802.11 be standard. The STA may also support various current and future 802.11 family WLAN standards such as 802.11 ax, 802.11 ac, 802.11 n, 802.11 g, 802.11 b, and 802.11 a.

In some embodiments, the AP 110 and/or the STA 120 may be deployed on land, including indoor or outdoor, handheld, wearable, or in-vehicle. It may also be deployed on the surface of the water (such as a ship). It may also be deployed in the air (e.g. on aircraft, balloons and satellites, etc.).

In some embodiments, the STA 120 may be a mobile phone supporting WLAN/WiFi technology, a pad, a computer with wireless transceiver function, a virtual reality (VR) device, an augmented reality (AR) device, a wireless device in an industrial control, a set-top box, a wireless device in a self-driving, an in-vehicle communication device, a wireless device in a remote medical, a wireless device in a smart grid, a wireless device in a transportation safety, a wireless device in a smart city or a smart home, an in-vehicle communication device, a wireless communication chip/an application specific integrated circuit (ASIC)/a system on chip (SoC), etc.

Exemplarily, the STA 120 may also be a wearable device. Wearable devices can also be called wearable smart devices, which are a general term for applying wearable technology to intelligently design daily wear and develop wearable devices, such as glasses, gloves, watches, clothing and shoes. The wearable device is a portable device that is worn directly on the body or integrated into the user's clothes or accessories. The wearable device is not only a hardware device, but also realizes powerful functions through software support, data interaction and cloud interaction. Generalized wearable smart devices include full functions, large size, and can realize complete or partial functions without relying on smart phones, such as smart watches or smart glasses, as well as those that only focus on a certain type of application functions and need to be used in conjunction with other devices like smart phones, such as various smart bracelets and smart jewelry for physical sign monitoring.

It should be understood that FIG. 1 is merely an example of the present disclosure and should not be construed as a limitation of the present disclosure. For example, FIG. 1 illustrates only one AP and two STAs by way of example, and in some embodiments, the communication system may include a plurality of APs as well as other numbers of STAs, which are not limited by the embodiments of the present disclosure.

FIG. 2 is an example of another communication system architecture applied to an embodiment of the present disclosure.

As shown in FIG. 2, the communication system may include a terminal device 210 and a network device 220. The network device 220 may communicate with the terminal device 210 through an air interface. Multi-service transmission is supported between the terminal device 210 and the network device 220.

It should be understood that the technical solutions of the embodiments of the present disclosure can be applied to various communication systems, such as an IoT system, a narrow band internet of things (NB-IoT) system, an enhanced machine-type communications (eMTC) system, a 5th Generation Mobile Communication Technology (5G) communication system (also referred to as a new radio (NR) communication system), or a future communication system, and the like.

In the communication system shown in FIG. 1, the network device 220 may be an access network device that communicates with the terminal device 210. The access network device may provide communication coverage for a particular geographic area and may communicate with the terminal device 210 (e.g., a user equipment (UE)) located within the coverage area.

The network device 220 may be a next generation radio access network (NG RAN) device, or a base station (a generation Node B, gNB) in an NR system, or a wireless controller in a cloud radio access network (CRAN), or the network device 120 may be a relay station, an access point, an in-vehicle device, a wearable device, a hub, a switch, a network bridge, a router, or a network device in a future evolution public land mobile network (PLMN), etc.

The terminal device 210 may be any terminal device including, but not limited to, terminal devices connected to the network device 220 or other terminal devices in a wired or wireless manner.

For example, the terminal device 210 may be an access terminal, a UE, a user unit, a user station, a mobile station, a mobile unit, a remote station, a remote terminal, a mobile device, a user terminal, a terminal, a wireless communication device, a user agent or a user device. The access terminal may be a cellular telephone, a cordless telephone, a session initiation protocol (SIP) telephone, an IoT device, a satellite handheld terminal, a wireless local loop (WLL) station, a personal digital assistant (PDA), a handheld device having wireless communication functionality, a computing device or other processing device connected to a wireless modem, an in-vehicle device, a wearable device, a terminal device in a 5G network, or a terminal device in a future evolution network, or the like.

The terminal device 210 may be used for device-to-device (D2D) communication.

The wireless communication system may further include a core network device 230 that communicates with the base station, and the core network device 230 may be a 5G core (5GC) device, for example, an access and mobility management function (AMF), or an authentication server function (AUSF), or a user plane function (UPF), or a session management function (SMF). Optionally, the core network device 130 may also be an evolved packet core (EPC) device in the LTE network, for example, a session management function + core packet gateway (SMF + PGW-C) device. It should be understood that the SMF + PGW-C can simultaneously implement functions of the SMF and PGW-C. In the process of network evolution, the core network devices may be called as other names, or may be formed as a new network entity by dividing the functions of the core network, which is not limited by the embodiments of the present disclosure.

FIG. 2 exemplarily illustrates one base station, one core network device and two terminal devices. Optionally, the wireless communication system may include a plurality of base station devices, and another number of terminal devices may be included within the coverage range of each base station, which is not limited in the embodiment of the present disclosure.

It should be noted that FIG. 1 and FIG. 2 only illustrates a system to which the present disclosure is applied as an example, and of course, the methods shown in the embodiments of the present disclosure can also be applied to other systems. Further, the terms "system" and "network" are often used interchangeably herein. Herein, the term "and/or" is only an association relationship describing an association object, and means that there may be three relationships. For example, A and/or B may mean that A alone exists, A and B simultaneously exist, and B alone exists. In addition, the character "/" herein generally indicates that the associated objects before and after are in an "or" relationship. It should also be understood that the "indication" mentioned in the embodiments of the present disclosure may be a direct indication, an indirect indication, or an associated relationship. For example, A indicates B, which may mean that A directly indicates B, for example, B can be acquired by A; which may also mean that A indicates B indirectly, for example A indicates C, and B can be acquired through C; which can also be indicated that there is an association relationship between A and B. It should also be understood that "correspondence" mentioned in the embodiments of the present disclosure may indicate that there is a direct correspondence or indirect correspondence between the two objects, there is an association relationship between the two objects, or may indicate an association between indicating and being indicated, configuring and being configured, or the like. It should also be understood that the "predefined" or "predefined rules" mentioned in the embodiments of the present disclosure may be implemented by storing corresponding codes or tables in advance in devices, or other manner for indicating relevant information (e.g., including terminal devices and network devices), and specific implementations thereof is not limited in the present disclosure. For example, predefining may refer to defining in the protocol. It should also be understood that in the embodiment of the present disclosure, the "protocol" may refer to a standard protocol in the field of communication, and may include, for example, an LTE protocol, an NR protocol, and related protocols applied in future communication systems, and the present disclosure is not limited thereto.

In order to facilitate understanding of the technical solutions of the embodiments of the present disclosure, the related technologies of the embodiments of the present disclosure are described below, and the related technologies below can be, as optional solutions, arbitrarily combined with the technical solutions of the embodiments of the present disclosure, and all of them belong to the scope of protection of the embodiments of the present disclosure.

Zero Power communication adopts energy harvesting and backscatter communication technologies. The zero power communication system consists of network device and zero power terminal. The network device is configured to send an energy supply signal, a downlink communication signal to the zero power terminal and receive a backscatter signal of the zero power terminal from the zero power terminal. As an example, the zero power terminal includes an energy harvesting module, a backscatter communication module and a low power computing module. In addition, the zero power terminal may also be provided with a memory and/or a sensor, the memory is used to store some basic information (such as article identification, etc.), and the sensor is used to obtain sensing data such as environmental temperature and environmental humidity.

Based on the energy source and usage mode of the zero power terminal, the zero power terminal can be classified into the passive zero power terminal, the semi-passive zero power terminal and the active zero power terminal.

### (1) Passive zero power terminal

The zero power terminal does not need a built-in battery, and when the zero power terminal approaches the network device, the zero power terminal is in the near-field range formed by the antenna radiation of the network device. Therefore, the antenna of the zero power terminal generates an induced current through electromagnetic induction, and the induced current drives the low power calculation module (that is, the low power chip circuit) of the zero power terminal to work, and realizes the signal demodulation of the forward link and the signal modulation of the backward link. For the backscatter link, the zero power terminal uses the backscatter implementation for signal transmission.

It can be seen that the passive zero power terminal does not need a built-in battery to drive neither the forward link nor the backward link, and is a true zero power terminal.

Since the passive zero power terminal does not need batteries, the radio frequency circuit and baseband circuit of the passive zero power terminal are both very simple, for instance, they do not require low-noise amplifiers (LNA), power amplifiers (PA), crystal oscillators, analog-to-digital converters (ADC), etc. Therefore, they have many advantages such as small size, light weight, low price and long service life.

### (2) Semi-passive zero power terminal

The semi-passive zero power terminal itself is not equipped with a conventional battery, but can use an energy harvesting module to collect radio wave energy and store the collected energy in an energy storage unit (such as a capacitor). After the energy storage unit obtains energy, it can drive the low power computing module (that is, the low power chip circuit) of the zero power terminal to work, and realize the signal demodulation of the forward link and the signal modulation of the backward link. For the backscatter link, the zero power terminal uses the backscatter implementation for signal transmission.

It can be seen that the semi-passive zero power terminal does not need a built-in battery to drive neither the forward link nor the reverse link. Although the energy stored by the capacitor is used in operation, the energy comes from the energy of radio waves collected by the energy harvesting module, so it is also a real zero power terminal.

The semi-passive zero power terminal inherits many advantages of the passive zero power terminal, so it has many advantages such as small size, light weight, low price and long service life.

### (3) Active zero power terminal

The zero power terminals used in some scenarios can also be active zero power terminals, and such terminals can have built-in batteries. The battery is used to drive the low power computing module (that is, the low power chip circuit) of the zero power terminal to demodulate the forward link signal and modulate the backward link signal. However, for the backscatter link, the zero power terminal uses the backscatter implementation for signal transmission. Therefore, the zero power consumption of this type of terminal is mainly reflected in the fact that the signal transmission of the reverse link does not require the terminal's own power, but uses the backscattering method.

The built-in battery of the active zero power terminal supplies power to radio frequency chip to increase communication distance and improve communication reliability. Therefore, it can be applied in some scenarios that the requirements for communication distance, communication delay and other aspects are relatively high.

With the increase of industry applications, there are more and more types and application scenarios of connectors, and there will also be higher requirements for the price and power consumption of communication device. The application of battery-free, low-cost IoT devices has become a key technology of cellular IoT, enriching the types and quantities of network link terminals and truly realizing the internet of everything. IoT devices can be based on zero power communication technologies, such as radio frequency identification (RFID) technology, and extended on this basis to be suitable for cellular internet of things.

The energy of a passive IoT device may be derived from the environment, referred to as an ambient IoT (AMP IoT) device based on environment energy. The energy required for the operation of such devices comes from environmental energy harvesting, and the source of environmental energy may be wireless signals, solar energy, thermal energy, etc. The passive zero power terminal or the semi-passive zero power terminal in zero power communication is a typical passive IoT device.

In a WiFi system, information (or data) is transmitted based on a physical layer protocol data unit (PPDU). As shown in FIG. 3, the PPDU includes a physical layer header and a data portion. The physical layer header includes the following three parts: a short training field (STF), a long training field (LTF) and a signal. The STF is mainly composed of 10 short symbols (denoted as t1-t10), each symbol is 0.8 us, mainly realizing frame synchronization and coarse frequency synchronization. Among them, t1-t7 mainly implement signal detect, automatic gain control (AGC), and diversity selection functions, and t8-t10 mainly implement coarse freq, offset estimation, timing synchronize function. The LTF mainly implements fine frequency synchronization and channel estimation. The signal carries information related to the data portion, including data transmission rate, length information of data packet, reserved bits and tail bits.

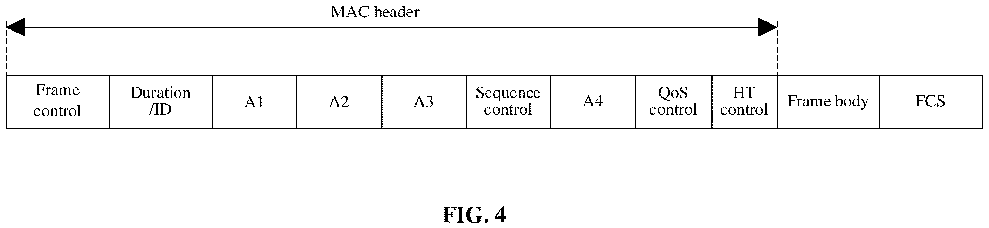

The data part of the PPDU carries a MAC frame. As shown in FIG. 4, the frame structure of the MAC frame includes the following parts: a MAC header, a frame body, and a frame check sequence (FCS). The MAC header portion includes the following parts: a frame control field, a duration/ID field, an address 1 (A1) field, an address 2 (A2) field, an address 3 (A3) field, a sequence control field, an address 4 (A4) field, a quality of service (QoS) control field, a high-throughtput control (HT control) field, a frame body field, and an FCS.

The duration/ID occupies 2 bytes (i.e. 16 bits), which is used to indicate how long the frame and its acknowledgement frame will occupy the channel, and is used to record the value of network allocation amount (NAV). The access media time limit is specified by the NAV. When the 15th bit is set to 0, the duration/ID is used to set the NAV. This value represents how subtle the media is expected to be used for the current transmission. The workstation must monitor any frame headers received and update the NAV accordingly. Any value that exceeds the expected usage time of media updates the NAV and prevents other workstations from accessing the media at the same time.

Address 1 represents the receiver address. In some cases, the receiver is the destination, but not all. The destination refers to the workstation responsible for processing network layer packets in the frame. The receiver is the workstation responsible for decoding the radio into 802.11 frames. If Address 1 is set to a broadcast or multicast address, the basic service set identity (BSSID) must also be checked. The workstation will only answer broadcast or multicast information from the same BSS, as for other different BSS, they are ignored.

Address 2 represents the address of the transmitter and is used to send response information. In some cases, the transmitter is the source address, but not all. The source address refers to the workstation that generates the network layer protocol packet in the frame. The transmitter is responsible for sending the frame to the wireless link.

Address 3 is for filtering by base stations and transmission systems, but the usage of this information field depends on the type of network used.

Address 4 is generally not used and is only used in wireless distribution systems (WDS).

The sequence control takes up 2 bytes (i.e. 16 bits) and is used to reorganize frame fragments and discard duplicate frames. It consists of a 4-bit fragment number (FN) and a 12-bit sequence number (SN). The FN is used when the upper layer packet is cut. The fragment number of the first fragment is 0, and the fragment numbers of each subsequent fragment are accumulated to 1 in sequence to facilitate frame reorganization. All frame segments will have the same sequence number, and if it is a retransmission frame, the sequence number will not change. The function of the sequence number is equivalent to the counter of the transmitted frame, and the value of the counter is the modulo of 4096. The counter starts from 0 and accumulates by 1 for each upper layer packet processed by the MAC layer. If retransmission occurs, the sequence number remains unchanged, which is convenient for frame processing and repeated frames are discarded. All in all, the sequence number numbers the frames sent by the transmitter and filters the retransmitted frames to ensure the correctness of the frames.

The QoS control is a newly added MAC layer field in 802.11 e for priority control. This field is only available when the data frame is a QoS data subtype.

The HT control is a newly added MAC layer field in 802.11 n. Since starting from 802.11 n, MAC began to support 40M bandwidth, that is, the original two 20M bandwidths were merged into one 40M bandwidth. This field provides some control for high throughput data. This field is only available when the frame is set to a high throughput frame. The HT control not only appears in the data frame, but also in the management frame. It only requires the order field to be set to 1 to identify that the frame contains the HT control.

The frame body is used to carry information sent or received.

The FCS includes a 32-bit cyclic redundancy check (CRC) for error detection, therefore to enable the workstation to check the integrity of the received frame. On Ethernet, if the FCS of the frame is incorrect, it will be discarded immediately, otherwise it will be transmitted to the upper layer protocol for processing. On 802.11 networks, frames that pass the integrity check also require an acknowledgement from the receiver. For example, a data frame received correctly must receive a positive response, otherwise it must be retransmitted. 802.11 does not provide a negative acknowledgement mechanism for frames that fail the FCS check. Before retransmitting, the workstation must wait for the response timeout.

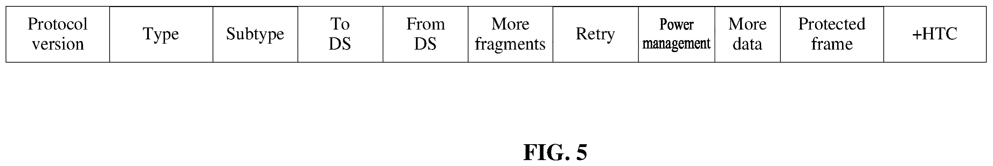

The frame control field of the MAC header contains some important information, as shown in Figure 5, including: a protocol version subfield, a type subfield, a subtype subfield, a to distribution system (DS) subfield, a from DS subfield, a more fragments subfield, a retry subfield, a power management subfield, a more data subfield, a protected frame subfield, an order subfield, a + high throughput control (HTC) subfield.

The protocol version is used to indicate the protocol version. A value of 0 represents the 802.11 protocol version, and a value of 1 represents the 802.11 ah protocol version.

Type is used to indicate the frame Type. The value of 00 represents the management frame, the value of 01 represents the control frame, the value of 10 represents the data frame, and the value of 11 is reserved unused. The control frame is used for handshake communication and forward acknowledgement during contention, end of non-contention period, etc. The management frame is used for the control of negotiation and relationship between STA and AP, such as association, authentication, synchronization, etc.. The data frame is used to transmit data during a contention period and a non-contention period.

The subtype is used to indicate the subtype of a frame. Take the type value of 01 as an example, the subtype value of 1011 represents a request to send RTS frame, and the subtype value of 1100 represents an allowed to send CTS frame. Specific frame types can be specified through the type and the subtype.

The to DS is used to indicate whether the frame is a frame transmitted by the basic service set (BSS) to the DS, that is, a frame transmitted by the wireless link to the wireless workstation.

The from DS is used to indicate whether the frame is a frame transmitted by the DS to the BSS, that is, a frame transmitted by the wireless workstation to the wireless link.

The more fragment is used to describe the situation where a long frame is fragmented and whether there are other frames. If so, the value of the more fragments is set to 1. Specifically, if the packet of the upper layer is segmented by the MAC layer, except for the last fragment, all other fragments will set the value of the more fragments to 1.

The retry is used to indicate that the segment is a retransmission frame of a previously transmitted segment. Specifically, when a frame needs to be retransmitted, the value of the retry is set to 1 for the retransmitted frame to assist the receiver in eliminating duplicate frames.

The power management is used to indicate the power management mode adopted by the transmitter after the frame is transmitted. In other words, it is used to indicate the power management state of the transmitter after the current frame exchange process is completed. A value of 1 indicates that it is in power save mode, and a value of 0 indicates that it is in active mode.

The more data is used to indicate that more frames are buffered to the station. When there is at least one data frame to be sent, the value of the more data is set to 1. The more data is only used to manage data frames, and the value of the more data in the control frame is set to 0.

The protected frame is used to indicate that the frame body is encrypted according to an algorithm. If the frame body part contains data processed by the key, the value of the protected frame is set to 1, otherwise it is set to 0.

The order is used to indicate that frames and frame fragments can be transmitted sequentially, but the MAC of the transmitter and the receiver must pay an additional price and strictly number the frame fragments. Once "strictly sequential" delivery is performed, the value of the order is set to 1.

+ HTC is the indicator bit associated with the HT control.

The energy required for the operation of IoT devices based on environmental energy mainly comes from the environment. Compared with conventional communication devices, this type of communication devices has some characteristics, such as: short working duration, most of the transmitted services are small packets of data, and low capabilities. In view of this, if the communication device based on environmental energy continues to use the frame structure used by the conventional communication device, the communication device based on environmental energy may cause problems such as excessive energy consumption, low transmission efficiency, and even failure to transmit normally. Therefore, the following technical solutions according to the embodiments of the present disclosure are proposed.

In order to facilitate understanding of the technical solutions of the embodiments of the present disclosure, the technical solutions of the present disclosure will be described in detail below with reference to specific embodiments. As an optional solution, the above related technologies can be arbitrarily combined with the technical solutions of the embodiments of the present disclosure, and all of them belong to the scope of protection of the embodiments of the present disclosure. The embodiments of the present disclosure include at least some of the following.

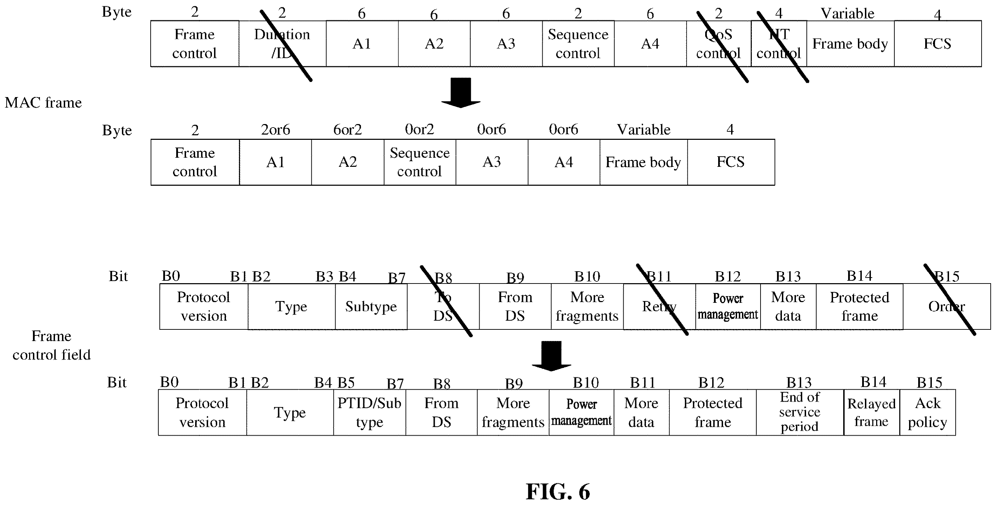

Based on the frame structure shown in FIG. 4 and FIG. 5, it can be simplified to some extent. As shown in FIG. 6, a new MAC frame structure can be obtained by deleting the duration/ID field, the QoS control field, and the HT Control field in the MAC frame shown in FIG. 4. The to DS subfield, the retry subfield, and the order subfield in the frame control field shown in FIG. 5 may be deleted, and an end of service period subfield, a relayed frame subfield, and an Ack policy subfield may be added to obtain a new frame control field structure.

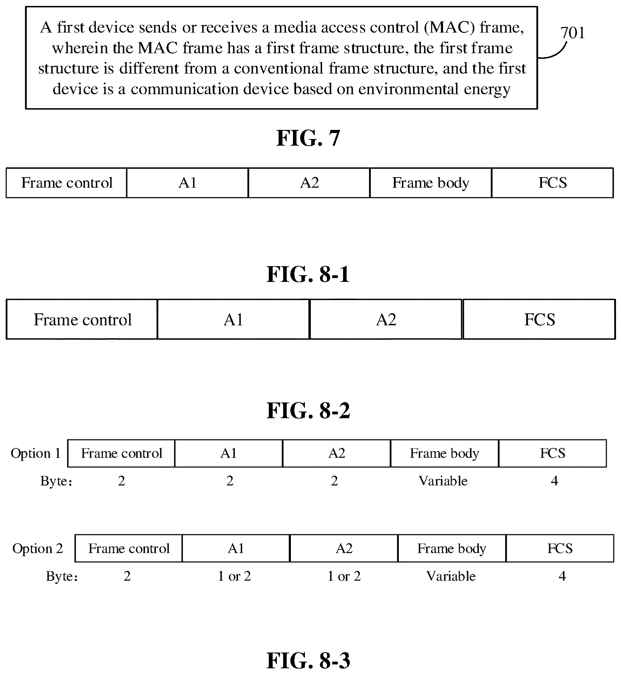

FIG. 7 is a schematic flowchart of a frame transmission method according to an embodiment of the present disclosure, and as shown in FIG. 7, the frame transmission method may include step 701.

At step 701, a first device sends or receives a media access control (MAC) frame, wherein the MAC frame has a first frame structure, the first frame structure is different from a conventional frame structure, and the first device is a communication device based on environmental energy.

In an embodiment of the present disclosure, the first device is a communication device based on environmental energy, such as an IoT device based on environmental energy, and the type of environmental energy may be a wireless signal, a solar energy, a thermal energy, or the like.

In some embodiments, the first device is a STA. Step 701 may be described as: the STA sends the MAC frame to the AP or the STA receives the MAC frame sent by the AP. The communication system in which the STA and the AP are located may be shown in FIG. 1.

In some embodiments, the first device is a terminal device. Step 701 may be described as: the terminal device sends the MAC frame to the network device or the terminal device receives the MAC frame sent by the network device. The communication system in which the terminal device and the network device are located may be shown in FIG. 2.

It should be noted that the MAC frame sent by the first device belongs to an uplink frame, and the MAC frame received by the first device belongs to a downlink frame.

In the embodiment of the present disclosure, the frame structure (which may also be referred to as a frame format) used by the communication device based on environmental energy is different from the conventional frame structure. Herein, the conventional frame structure refers to a frame structure used by a conventional communication device. Fig. 4, Fig. 5, and Fig. 6 are a typical conventional frame structure.

In the embodiment of the present disclosure, the first frame structure is different from the conventional frame structure, and includes at least one of the following operations.

An address field in the first frame structure is different from an address field in the conventional frame structure;

A sequence control field in the first frame structure is different from a sequence control field in the conventional frame structure;
The first frame structure does not comprise the sequence control field compared to the conventional frame structure; and
A frame control field in the first frame structure is different from a frame control field in the conventional frame structure.

It can be understood that the first frame structure is a new frame structure generated by optimizing the conventional frame structure. Hereinafter, the difference between the first frame structure and the conventional frame structure will be described in detail.

### Scheme 1: Optimization of address field

In some implementations, the address field in the first frame structure IS different from the address field in the conventional frame structure. This is manifested in one or more of the following aspects:
1) The first frame structure does not include a third address field and a fourth address field compared to a conventional frame structure;
2) A first address field and a second address field in the first frame structure are different from a first address field and a second address field in the conventional frame structure.

Herein, the first address field, that is, Address 1 (referred to as A1 for short) of the MAC header portion. The second address field, that is, Address 2 (referred to as A2 for short) of the MAC header portion. The third address field, that is, Address 3 (referred to as A3 for short) of the MAC header portion. The fourth address field is also Address 4 (referred to as A4 for short) of the MAC header.

For the first frame structure, the MAC header portion does not include the third address field and the fourth address field, because in a communication system (such as a zero power communication system), the service is terminated on an AP or a network device, therefore A3 and A4 are not needed in the communication process. In addition, the first address field and the second address field of the MAC header thereof have new explanations, and the new explanations are given below.

Case 1) In the case where the MAC frame is a downlink frame, in the first frame structure, the first address field is used to indicate a receiver address, and a value of the first address field is an associated identifier (AID), an identifier (ID) or a truncated ID of a receiver; and the second address field is used to indicate a transmitter address, and a value of the second address field is an address identifier, a MAC address, a truncated MAC address, a basic service set identifier (BSSID) or a truncated BSSID of a transmitter.

Herein, optionally, the first address field occupies two bytes or one byte, and the second address field occupies two bytes or one byte.

In one example, the STA receives a MAC frame sent by the AP, and the MAC frame is a downlink frame. In this case, A1 is the address of the receiver (i.e., the address of the STA), which can occupy two bytes or one byte. The value of A1 is the AID, the ID or the truncated ID of the STA, and the number of STAs that can be supported by the AID is 65535 (the values of AID are 0 to 65535, where 0 is reserved). A2 is the address of the transmitter (i.e. the address of the AP), which can occupy two bytes or one byte. The value of A2 is an address identifier that the AP notifies the STA about the AP when the AP is associated with the STA, or may be the MAC address, the truncated MAC address, the BSSID, or the truncated BSSID of the AP.

Case 2) In the case where the MAC frame is an uplink frame, in the first frame structure, the first address field is used to indicate a receiver address, and a value of the first address field is an address identifier, a MAC address, a truncated MAC address, a BSSID or a truncated BSSID of a receiver; and the second address field is used to indicate a transmitter address, and a value of the second address field is an AID, an ID or a truncated ID of the transmitter.

Herein, optionally, the first address field occupies two bytes or one byte, and the second address field occupies two bytes or one byte.

In one example, the STA sends a MAC frame to the AP, the MAC frame is an uplink frame. In this case, A1 is the address of the receiver (i.e., the address of the AP), which can occupy two bytes or one byte. The value of A1 is an address identifier that the AP notifies the STA about the AP when the AP is associated with the STA, or may be the MAC address, the truncated MAC address, the BSSID, or the truncated BSSID of the AP. A2 is the address of the transmitter (i.e. the address of the STA), which can occupy two bytes or one byte. The value of A2 is the AID, the ID or the truncated ID of the STA, and the number of STAs that can be supported by the AID is 65535 (the values of AID are 0 to 65535, where 0 is reserved).

### Scheme 2: Optimization of sequence control field

In some embodiments, the sequence control field in the first frame structure is different from the sequence control field in the conventional frame structure. This is reflected in the following aspects: In case that the MAC frame is the downlink frame, the first frame structure does not comprise the sequence control field. In case that the MAC frame is the uplink frame, the first frame structure comprises the sequence control domain.

Here, the sequence control field is also the sequence control field of the MAC header portion.

For the first frame structure, the MAC header portion of the first frame structure distinguishes whether the sequence control field is included according to the uplink and downlink conditions. For the downlink condition, the sequence control field is not included. For the uplink condition, the sequence control field is included.

N1 bit in the sequence control field is used to indicate a sequence number and/or N2 bit in the sequence control field is used to indicate a segment number. The values of N1 and N2 are different. Option 1) N1 > 1 and N2 = 0, the sequence control field is only used to indicate the sequence number; option 2) N1 = 0 and N2 > 0, the sequence control field is only used to indicate the fragment number; or, option 3) N1 > 1 and N2 > 0, the sequence control field is used to indicate the sequence number and the fragment number.

For option 1, a value of N1 is less than 12. For option 2), a value of N2 is less than 4. For option 3), a value of the sum of N1 and N2 is less than 16, and further, the value of N1 is less than 12 and the value of N2 is less than 4.

In some embodiments, in the first frame structure, the sequence control field is located within the MAC header and outside the frame control field; or, the sequence control field is located within the MAC header and within the frame control field.

In one example, if there are multiple data packets being sent and/or there is a segmentation situation, the corresponding MAC frame needs to include a sequence control field for indicating the sequence number of the data packet and/or the number of the segmentation in one data packet. Further, if there are multiple data packets being sent but there is no segmentation situation, the sequence control field included in the corresponding MAC frame indicates the sequence number of the data packet. If there is a single data packet being sent but there is a segmentation situation, the sequence control field included in the corresponding MAC frame indicates the number of the segmentation in one data packet. If there are multiple data packets being sent and there is a segmentation situation, the sequence control field included in the corresponding MAC frame indicates the sequence number of the data packet and the number of the segmentation in one data packet. If there are no multiple data packets sent and no segmentation situation, the corresponding MAC frame does not need to include a sequence control field, and further, it does not need to include more segmentation subfields and more data subfields.

In one example, in the case of single data packet transmission and no segmentation requirement, the sequence control field in the corresponding MAC frame may be deleted. If there is no segmentation requirement, but there are multiple data packets are sent, the corresponding MAC frame needs to have a sequence control field indicating the sequence number, and the data packets are numbered by the sequence number. Since the number of data packets is less, the number of bits occupied by the sequence control field can be less than that of the conventional frame structure (for example, 3 bits), and this sequence control field can be called a compressed sequence control field. The sequence control field may be located within the MAC header and outside the frame control field; or, the sequence control field is located within the MAC header and within the frame control field. In one case, the STA receives a MAC frame sent by the AP, and the MAC frame is a downlink frame. In this case, the MAC frame sent by the AP may be a control frame or a management frame, and there is no need for a data frame, and there may be no sequence control field in the MAC frame. In another case, the STA sends a MAC frame to the AP, and the MAC frame is an uplink frame. In this case, the MAC frame sent by the STA may be a control frame, a management frame, or a data frame, and there may be a sequence control field in the MAC frame.

### Scheme 3: Optimization of frame control field

In some embodiments, the frame control field in the first frame structure is different from the frame control field in the conventional frame structure. Here, the frame control field is also a frame control field of the MAC header portion. The frame control fields differ in one or more of the following aspects:
1) In a first frame structure, the frame control field comprises a protocol version subfield;
   The protocol version subfield is used to indicate whether the direction of the MAC frame is the uplink frame or the downlink frame;
   The protocol version subfield is used to indicate a device type of the first device;
   The protocol version subfield is used to indicate an energization type of the first device; or,
   The protocol version subfield is used to indicate a frame structure of the MAC frame.
      In one example, the protocol version subfield occupies 2 bits or 1 bit, which take different values to represent different meanings. Option 1) The protocol version subfield is used to indicate whether the direction of the MAC frame is an uplink frame or a downlink frame, and the uplink frame and the downlink frame correspond to different frame structures. Option 2) The protocol version subfield is used to indicate a device type or an energy supply type of the first device, and different device types or energy supply types correspond to different device capabilities, resulting in different corresponding frame structures. For example, the solar power supply mode can send multiple consecutive data packets, and its corresponding frame structure requires a sequence control field. However, the radio frequency power supply mode can only transmit one data packet at a time, and its corresponding frame structure does not need a sequence control field. Option 3) The protocol version subfield is used to indicate specific frame structures, such as minimalist frame structures, simplified frame structures, conventional frame structures, etc. The size of the minimalist frame structure is smaller than that of the simplified frame structure, and the size of the simplified frame structure is smaller than that of the conventional frame structure. In the scenario of no segmentation and single data packet transmission, one data packet is transmitted at a time, and the situation is relatively simple. The information field required in the frame structure is less and/or the number of bits occupied by the information field is less, so the minimalist frame structure or the simplified frame structure (that is, the first frame structure) is suitable. In the scenario of multi-packet data transmission and/or supporting packet segmentation, the situation is more complicated, and the frame structure requires more information fields and/or occupies more bits, so it is suitable for the conventional frame structure.
2) In the first frame structure, the frame control field comprises a type subfield and/or a subtype subfield. The type subfield is used to indicate a frame type of the MAC frame. The subtype subfield is used to indicate a frame subtype of the MAC frame.

Here, in case that the MAC frame is the downlink frame, the type subfield occupies N3 bit and/or the subtype subfield occupies N4 bit, and in case that the MAC frame is the uplink frame, the type subfield occupies N5 bit and/or the subtype subfield occupies N6 bit, wherein a value of N3 is different from a value of N5, and/or a value of N4 is different from a value of N6.

In some embodiments, the value of N3 is less than the value of N5, and/or the value of N4 is smaller than the value of N6.

In one example, the frame type may include a management frame, a control frame, a data frame, and the like. The subtypes of a frame vary depending on the frame type. When the frame types are different, the subtypes are also different. For example, the frame type may be indicated by a 2-bit type subfield, while the subtype may be indicated by a 3-bit subtype subfield. For downlink and uplink, the type subfield and/or the subtype subfield may be different, for example, for downlink, the frame type is only a management frame and a control frame, so the type may be indicated by a 1-bit type subfield. For uplink, the frame type includes a management frame, a control frame, and a data frame, so the type may be indicated by a 2-bit type subfield.

3) In the first frame structure, the frame control field does not comprise the to DS subfield and/or the from DS subfield; or, the frame control field comprises the to DS subfield, the from DS subfield and/or a first subfield for indicating a direction of the MAC frame, wherein the to DS subfield is used to indicate whether the MAC frame is a frame sent by the BSS to the DS, the from DS subfield is used to indicate whether the MAC frame is a frame sent by the DS to the BSS.

In some embodiments, in addition to the to DS subfield and/or the from DS subfield, if there is an information field for determining a direction of the MAC frame in the first frame structure, the frame control field does not comprise the to DS subfield and/or the from DS subfield. If there is no information field for determining the direction of the MAC frame in the first frame structure, the frame control field comprises the to DS subfield, the from DS subfield and/or the first subfield.

In one example, the frame control field may not contain the to DS subfield and/or the from DS subfield if the direction of the MAC frame can be distinguished by other information fields (e.g., the protocol version subfield, the first address field, the second address field, etc.), otherwise, the frame control field needs to contain the to DS subfield, the from DS subfield and/or a new subfield (i.e., the first subfield) to indicate the direction of the MAC frame.

4) In case that the MAC frame is the downlink frame, in the first frame structure, the frame control field does not comprise the more fragments subfield and/or the more data subfield, the more fragments subfield is used to indicate whether more fragments are to be transmitted, and the more data subfield is used to indicate whether more data is to be transmitted. In case that the MAC frame is the uplink frame, in the first frame structure, the frame control field comprises the more fragments subfield and/or the more data subfield, the more fragments subfield is used to indicate whether more fragments are to be transmitted, and the more data subfield is used to indicate whether more data is to be transmitted.

In one example, if there is no case where multiple data packets are transmitted, the more data subfields need not be included in the corresponding MAC frame. If there is no segmentation transmission, the corresponding MAC frame does not need to include more segmented subfields.

5) In the first frame structure, the frame control field comprises an acknowledgement policy subfield for indicating whether feedback and/or a type of feedback is required.

In one example, the acknowledgement policy subfield is used to indicate whether feedback is needed and may occupy 1 bit.

In one example, the acknowledgement policy subfield is used to indicate whether feedback and the type of feedback are needed, and may occupy 2 bits. For example, when the value of 2 bits is the first value, it is used to indicate that feedback one by one is required, when the value of 2 bits is the second value, it is used to indicate that feedback one by one is required, and when the value of 2 bits is the third value, it is used to indicate that feedback is not required.

6) In the first frame structure, the frame control field comprises at least one of a second subfield, a third subfield, a fourth subfield, and a fifth subfield;
The second subfield is used to indicate a first time interval, wherein the first time interval is a time interval between a time of next uplink transmission and a time of current uplink transmission or a time interval between a time of transmission of the next trigger signal and a time of transmission of the current trigger signal;
The third subfield is used to indicate that the first device is in a sleep state and/or is not in a sleep state;
The fourth subfield is used to indicate that the first device has an uplink transmission to be transmitted and/or does not have an uplink transmission to be transmitted; and
The fifth subfield is used to instruct the first device to request the power supply signal.

In the above scheme, some information fields in the frame control field may be moved to the MAC packet header, that is, moved outside the frame control field. Some information fields in the MAC packet header may also be moved to the frame control field.

In the embodiment of the present disclosure, the data may be transmitted on the control plane or the user plane.

In some embodiments, in case that the MAC frame is a management frame or a control frame, data is transmitted on the control plane, and accordingly, the first frame structure comprises a MAC header and an FCS; or, the first frame structure comprises a MAC header, a frame body, and an FCS. The data sent or received by the first device is indicated by an information field in the MAC header, and/or the data sent or received by the first device is carried in the frame body as an information element.

In some embodiments, when the MAC frame is a data frame, data is transmitted on the user plane, and accordingly, the first frame structure comprises a MAC header, a frame body, and an FCS. The data sent or received by the first device is carried in the frame body.

It should be noted that the above schemes can be implemented independently or in any combination.

Through the above-described solutions of the embodiments of the present disclosure, a new MAC frame structure is realized, and several MAC frame structures are listed below with reference to the accompanying drawings. It should be noted that the technical solutions of the embodiments of the present disclosure are not limited to the MAC frame structures listed below, and more types of MAC frame structures can be used in combination with the above-described solutions.

In one example, as shown in FIG. 8-1, the MAC frame structure comprises a frame control field, an A1 field, an A2 field, a frame body, and an FSC. The MAC frame may be a data frame, and data may be carried in a frame body; or, the MAC frame may be a management frame or a control frame, and the data may be carried in the frame body as an information element.

In one example, as shown in FIG. 8-2, the MAC frame structure comprises a frame control field, an A1 field, an A2 field, and an FSC. The MAC frame may be a management frame or a control frame, and the data may be what is indicated by the A2 field.

In one example, as shown in FIG. 8-3, the MAC frame structure comprises a frame control field, an A1 field, an A2 field, a frame body, and an FSC. In Option 1, the frame control field occupies 2 bytes, the A1 field occupies 2 bytes, the A2 field occupies 2 bytes, the number of bytes occupied by the frame body is variable, and the FSC occupies 4 bytes. In Option 2, the frame control field occupies 2 bytes, the A1 field occupies 1 or 2 bytes, the A2 field occupies 1 or 2 bytes, the number of bytes occupied by the frame body is variable, and the FSC occupies 4 bytes.

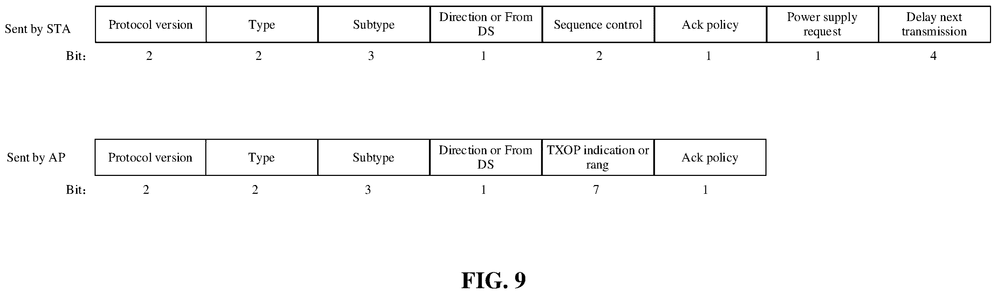

In one example, as shown in FIG. 9, for the MAC frame sent by the STA, the frame control field includes a protocol version subfield, a type subfield, a subtype subfield, a direction subfield (that is, a first subfield) or a from DS subfield, a sequence control subfield, an Ack policy subfield, a power supply request subfield (that is, a fifth subfield), and a delay next transmission subfield (that is, a second subfield). For the MAC frame sent by the AP, the frame control field includes a protocol version subfield, a type subfield, a subtype subfield, a direction subfield (that is, a first subfield) or a from DS subfield, a TXOP indication subfield, and an Ack policy subfield. Here, the TXOP indication subfield is a TXOP that instructs the AP to perform channel preemption, and can be shared with the STA for use.

The preferred embodiments of the present disclosure have been described in detail above with reference to the accompanying drawings, but the present disclosure is not limited to the specific details in the above-described embodiments. Within the scope of the technical concept of the present disclosure, various simple modifications can be made to the technical solutions of the present disclosure, and these simple modifications all fall within the scope of protection of the present disclosure. For example, various specific technical features described in the above-described detailed embodiments may be combined in any suitable manner without contradiction, and various possible combinations are not be described separately in the present disclosure in order to avoid unnecessary repetition. For example, various embodiments of the present disclosure may be combined arbitrarily, and as long as they do not contradict the idea of the present disclosure, they should be regarded as the disclosure of the present disclosure as well. For another example, on the premise that there is no conflict, each embodiment described in the present disclosure and/or the technical features in each embodiment may be arbitrarily combined with the prior art, and the technical solution obtained after the combination should also fall within the scope of protection of the present disclosure.

It should also be understood that in various method embodiments of the present disclosure, the size of the sequence number of the above-described processes does not mean the sequence of execution, and the sequence of execution of each process should be determined by its function and internal logic, and should not constitute any limitation on the implementation of the embodiments of the present disclosure. In addition, in the embodiment of the present disclosure, the terms "downlink", "uplink", and "sidelink" are used to indicate the transmission direction of signals or data. The "downlink" indicates that the transmission direction of the signal or data is a first direction transmitted from a station to a user equipment of the cell, and the "uplink" indicates that the transmission direction of the signal or data is a second direction transmitted from the user equipment of the cell to the station. The "sidelink" indicates that a transmission direction of the signal or data is a third direction transmitted from the user equipment 1 to the user equipment 2. For example, "downlink signal" indicates that the transmission direction of the signal is the first direction. In addition, in the embodiment of the present disclosure, the term "and/or" is only one kind of association relationship describing associated objects, and indicates that there may be three relationships. Specifically, A and/or B may represent three cases of A alone, A and B simultaneously, and B alone. In addition, the character "/" herein generally indicates that the associated objects before and after are in an "or" relationship.

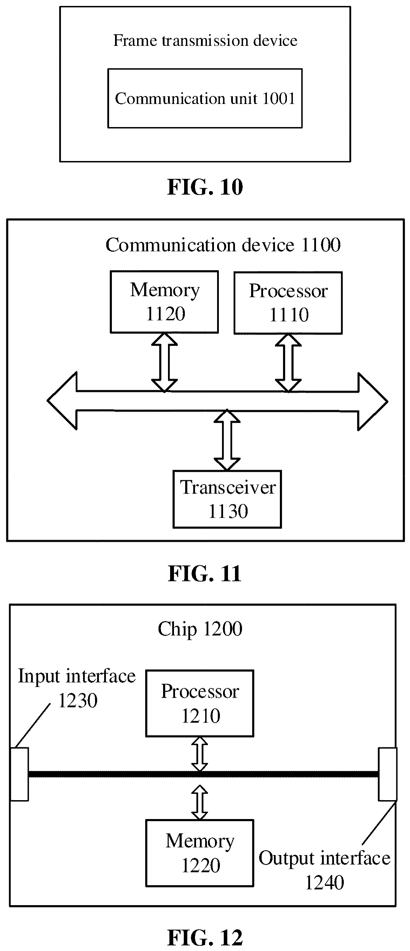

FIG. 10 is a schematic diagram of a structural composition of a frame transmission device according to an embodiment of the present disclosure, and is applied to a first device. As shown in Figure 10, the frame transmission device comprises a communication unit 1001.

The communication unit 1001 is configured to send or receive a MAC frame, wherein the MAC frame has a first frame structure, the first frame structure is different from a conventional frame structure, and the first device is a communication device based on environmental energy.

In some embodiments, the first frame structure is different from the conventional frame structure and includes at least one of the following operations.

An address field in the first frame structure is different from an address field in the conventional frame structure;
A sequence control domain in the first frame structure is different from a sequence control domain in the conventional frame structure;
The first frame structure does not include the sequence control domain compared to the conventional frame structure; and
A frame control domain in the first frame structure is different from a frame control domain in the conventional frame structure.

In some embodiments, the address field in the first frame structure is different from the address field in the conventional frame structure in at least one of the following operations.

The first frame structure does not include a third address field and a fourth address field compared to the conventional frame structure; andA first address field and a second address field in the first frame structure are different from a first address field and a second address field in the conventional frame structure.

In some embodiments, in the first frame structure, in case that the MAC frame is a downlink frame,
The first address field is used to indicate a receiver address, and a value of the first address field is an associated identifier (AID), an identifier (ID) or a truncated ID of a receiver; and
The second address field is used to indicate a transmitter address, and a value of the second address field is an address identifier, a MAC address, a truncated MAC address, a basic service set identifier (BSSID) or a truncated BSSID of a transmitter.

In some embodiments, the first address field occupies two bytes or one byte, and the second address field occupies two bytes or one byte.

In some embodiments, in the first frame structure, in case that the MAC frame is an uplink frame,
The first address field is used to indicate a receiver address, and a value of the first address field is an address identifier, a MAC address, a truncated MAC address, a BSSID or a truncated BSSID of a receiver; and
The second address field is used to indicate a transmitter address, and a value of the second address field is an AID, an ID or a truncated ID of the transmitter.

In some embodiments, the first address field occupies two bytes or one byte, and the second address field occupies two bytes or one byte.

In some embodiments, in case that the MAC frame is a downlink frame, the first frame structure does not include the sequence control field.

In some embodiments, in case that the MAC frame is the uplink frame, the first frame structure comprises the sequence control domain.

In some embodiments, N1 bit in the sequence control domain is used to indicate a sequence number and/or N2 bit in the sequence control domain is used to indicate a segment number.

In some embodiments, N1 > 1 and N2 = 0, the sequence control domain is used only to indicate the sequence number; N1 = 0 and N2 > 0, the sequence control domain is used only to indicate the fragment number; or, N1 > 1 and N2 > 0, the sequence control domain is used to indicate the sequence number and the fragment number.

In some embodiments, a value of N1 is less than 12; a value of N2 is less than 4; and/or
A value of a sum of N1 and N2 is less than 16.

In some embodiments, in the first frame structure, the frame control field includes a protocol version subfield;
The protocol version subfield is used to indicate whether the direction of the MAC frame is the uplink frame or the downlink frame;
The protocol version subfield is used to indicate a device type of the first device;
The protocol version subfield used to indicate an energization type of the first device; or,
The protocol version subfield is used to indicate a frame structure of the MAC frame.

In some embodiments, in the first frame structure, the frame control field includes a type subfield and/or a subtype subfield;
The type subfield is used to indicate a frame type of the MAC frame; and
The subtype subfield is used to indicate a frame subtype of the MAC frame.

In some embodiments, in case that the MAC frame is the downlink frame, the type subfield occupies N3 bit and/or the subtype subfield occupies N4 bit; and in case that the MAC frame is the uplink frame, the type subfield occupies N5 bit and/or the subtype subfield occupies N6 bit; wherein a value of N3 is different from a value of N5; and/or a value of N4 is different from a value of N6.

In some embodiments, the value of N3 is less than the value of N5, and/or the value of N4 is smaller than the value of N6.

In some embodiments, in the first frame structure,
The frame control field does not include to distribution system (DS) subfield and/or from DS subfield; or,
The frame control domain comprises the to DS subfield, the from DS subfield and/or a first subfield for indicating a direction of the MAC frame;
The to DS subfield is used to indicate whether the MAC frame is a frame sent by a basic service set (BSS) to a DS, the from DS subfield is used to indicate whether the MAC frame is a frame sent by the DS to the BSS.

In some embodiments, in addition to the to DS subfield and/or the from DS subfield,
If there is an information field for determining a direction of the MAC frame in the first frame structure, the frame control field does not comprise the to DS subfield and/or the from DS subfield; and
If there is no information field for determining the direction of the MAC frame in the first frame structure, the frame control field comprises the to DS subfield, the from DS subfield and/or the first subfield.

In some embodiments, in case that the MAC frame is the downlink frame, in the first frame structure, the frame control domain does not comprise the more fragments subfield and/or the more data subfield, the more fragments subfield is used to indicate whether more fragments are to be transmitted, and the more data subfield is used to indicate whether more data is to be transmitted.

In some embodiments, in case that the MAC frame is the uplink frame, in the first frame structure, the frame control domain comprises the more fragments subfield and/or the more data subfield, the more fragments subfield is used to indicate whether more fragments are to be transmitted, and the more data subfield is used to indicate whether more data is to be transmitted.

In some embodiments, in the first frame structure, the frame control field includes an Ack policy subfield for indicating whether feedback and/or a type of feedback is required.

In some embodiments, in the first frame structure, the frame control field includes at least one of a second subfield, a third subfield, a fourth subfield, and a fifth subfield;
The second subfield is used to indicate a first time interval, wherein the first time interval is a time interval between a time of next uplink transmission and a time of current uplink transmission or a time interval between a time of transmission of the next trigger signal and a time of transmission of the current trigger signal;
The third subfield is to indicate that the first device is in a sleep state and/or is not in a sleep state;
The fourth subfield is used to indicate that the first device has an uplink transmission to be transmitted and/or does not have an uplink transmission to be transmitted; and
The fifth subfield is to instruct the first device to request an energy supply signal.

In some embodiments, in the first frame structure, the sequence control domain is located within a MAC header and outside the frame control domain; or, the sequence control domain is located within the MAC header and within the frame control domain.

In some embodiments, in case that the MAC frame is a management frame or a control frame, the first frame structure comprises the MAC header and an FCS; or, the first frame structure comprises the MAC header, a frame body, and the FCS.

In some embodiments, a data sent or received by the first device is indicated by an information field in the MAC header; and/or, the data sent or received by the first device is carried in the frame body as an information element.

In some embodiments, in case that the MAC frame is a data frame, the first frame structure comprises the MAC header, a frame body, and the FCS.

In some embodiments, the data sent or received by the first device is carried in the frame body.

Those skilled in the art should understand that the related description of the above-described frame transmission device according to the embodiment of the present disclosure can be understood with reference to the related description of the frame transmission method according to the embodiment of the present disclosure.

FIG. 11 is a schematic structural diagram of a communication device 1100 according to an embodiment of the present disclosure. The communication device may be a first device. The communication device 1100 shown in FIG. 11 includes a processor 1110, and the processor 1110 may invoke and execute a computer program from a memory to implement the method in the embodiment of the present disclosure.

Optionally, as shown in FIG. 11, the communication device 1100 may further include a memory 1120. The processor 1110 may invoke and execute a computer program from the memory 1120 to implement the method in the embodiment of the present disclosure.

The memory 1120 may be a separate device independent of the processor 1110, or may be integrated in the processor 1110.

Optionally, as shown in FIG. 11, the communication device 1100 may further include a transceiver 1130, and the processor 1110 may control the transceiver 1130 to communicate with other devices. Specifically, the processor may control the transceiver to transmit information or data to other devices, or receive information or data transmitted by other devices.

The transceiver 1130 may include a transmitter and a receiver. The transceiver 1130 may further include antennas, and the number of antennas may be one or more.

Specifically, the communication device 1100 may be the first device according to the embodiment of the present disclosure, and the communication device 1100 may implement flows implemented by the first device in each method according to the embodiment of the present disclosure, and the flows are not repeated here for the sake of brevity.

FIG. 12 is a schematic structural diagram of a chip according to an embodiment of the present disclosure. The chip 1200 shown in FIG. 12 includes a processor 1210, which can invoke and execute a computer program from a memory to implement the method in the embodiment of the present disclosure.

Optionally, as shown in FIG. 12, the chip 1200 may further include a memory 1220. The processor 1210 may invoke and execute a computer program from the memory 1220 to implement the method in the embodiment of the present disclosure.

The memory 1220 may be a separate device independent of the processor 1210 or may be integrated in the processor 1210.

Optionally, the chip 1200 may further include an input interface 1230. The processor 1210 may control the input interface 1230 to communicate with other devices or chips. Specifically, the processor may control the input interface to acquire information or data transmitted by other devices or chips.

Optionally, the chip 1200 may further include an output interface 1240. Among them, the processor 1210 may control the output interface 1240 to communicate with other devices or chips. Specifically, the processor may control the output interface to output information or data to other devices or chips.

The chip can be applied to the first device in the embodiment of the present disclosure, and the chip can implement the flows implemented by the first device in each method of the embodiment of the present disclosure, and the flows are not repeated here for the sake of brevity.

It should be understood that the chip mentioned in the embodiments of the present disclosure may also be referred to as a system-level chip, a system chip, a chip system, a system-on-chip chip, or the like.

It should be understood that the processor of the embodiment of the present disclosure may be an integrated circuit chip having signal processing capabilities. In the implementation process, the steps of the above-described method embodiments may be completed by integrated logic circuits of hardware in the processor or instructions in the form of software. The processor described above may be a general-purpose processor, a digital signal processor (DSP), an application specific integrated circuit (ASIC), a field programmable gate array (FPGA) or other programmable logic device, a discrete gate or transistor logic device, or a discrete hardware component, to implement or execute the methods, steps, and logical block diagrams disclosed in the embodiments of the present disclosure. The general purpose processor may be a microprocessor or the processor may be any conventional processor or the like. The steps of the method disclosed in connection with the embodiments of the present disclosure may be directly be executed by the hardware decoding processor, or may be executed by combining hardware and software modules in the decoding processor. The software module may be provided in a storage medium mature in the art, such as a random access memory, a flash memory, a read-only memory, a programmable read-only memory, or an electrically erasable programmable memory, a register, etc. The storage medium is arranged in the memory, and the processor reads the information in the memory, and completes the steps of the above method in combination with the hardware thereof.

It is understood that the memory in the embodiments of the present disclosure may be a volatile memory or a non-volatile memory, or may include both volatile and non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which serves as an external cache. By way of illustration, but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the systems and methods described herein is intended to include, but is not limited to, these and any other suitable type of memory.

It should be understood that the above memory is illustrative but is not limited thereto. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM), and the like. That is, the memory in the embodiments of the present disclosure is intended to include, but is not limited to, these and any other suitable type of memory.

The embodiments of the present disclosure further provide a computer-readable storage medium for storing a computer program. The computer-readable storage medium can be applied to the first device in the embodiment of the present disclosure, and the computer program causes the computer to execute the flows implemented by the first device in each method of the embodiment of the present disclosure, and the flows are not be described herein for the sake of brevity.

The embodiments of the present disclosure further provide a computer program product including computer program instructions. The computer program product may be applied to the first device in the embodiment of the present disclosure, and the operation of the computer program instruction causes the computer to execute the flows implemented by the first device in each method of the embodiment of the present disclosure, and the description of the flows are not repeated here for the sake of brevity.

The embodiments of the present disclosure further provide a computer program. The computer program may be applied to the first device in the embodiment of the present disclosure, and the computer program, when run on the computer, enables the computer to execute the flows implemented by the first device in each method of the embodiment of the present disclosure, and the description of the flows are not repeated here for the sake of brevity.

Those of ordinary skill in the art will appreciate that the elements and algorithmic steps of the various examples described in connection with the embodiments disclosed herein may be implemented in electronic hardware, or a combination of computer software and electronic hardware. Whether these functions are executed in hardware or software depends on the specific application and design constraints of the technical solution. Those skilled in the art may use different methods for implementing the described functions for each particular application, but such implementations should not be considered beyond the scope of the present disclosure.

Those skilled in the art can clearly understand that, for convenience and brevity of the description, regarding the specific operation processes of the systems, devices, and units described above, reference may be made to the corresponding processes in the aforementioned method embodiments, and the specific operation processes of the systems, devices, and units described above are not repeated here

In several embodiments provided herein, it should be understood that the disclosed systems, devices, and methods may be implemented in other ways. For example, the device embodiments described above are merely schematic, for example, the division of units is only one logical function division, and there may be other division methods in actual implementation. For example, multiple units or components may be combined or integrated into another system, or some features may be ignored or not implemented In addition, the coupling or direct coupling or communication connection shown or discussed may be an indirect coupling or communication connection through some interface, device or unit, which may be electrical, mechanical or otherwise.

The units described as separate units may or may not be physically separated, and the units displayed as units may or may not be physical units, that is, the units may be located at the same place or may be distributed over a plurality of network units. Some or all of the units may be selected according to actual needs to achieve the purpose of the solution of the present embodiment.

In addition, all functional units in each embodiment of the present disclosure may be integrated in one processing unit, or each function unit may be physically present alone, or two or more units may be integrated in one unit.

The functions may be stored in a computer-readable storage medium if implemented in the form of software functional units and sold or used as independent products. Based on this understanding, the technical solution of the present disclosure essentially or a part of the technical solution that contributes to the prior art or a part of the technical solution may be embodied in the form of a software product, the computer software product is stored in a storage medium, includes several instructions for causing a computer device (which may be a personal computer, server, or network device, etc.) to perform all or a part of the steps of the method described in various embodiments of the present disclosure. The storage medium includes a USB disk, a removable hard disk, a read-only memory (ROM), a random access memory (RAM), a magnetic disk, or an optical disk or a medium capable of storing program codes.

The foregoing is merely a specific embodiment of the present disclosure, but the scope of protection of the present disclosure is not limited thereto, and changes or substitutions easily conceived by any person skilled in the art within the technical scope disclosed in the present disclosure should be covered within the scope of protection of the present disclosure. Therefore, the scope of protection of the present disclosure should be subject to the scope of protection of the claims.

## Claims

1. A frame transmission method, comprising:
sending or receiving, by a first device, a media access control (MAC) frame, wherein the MAC frame has a first frame structure, the first frame structure is different from a conventional frame structure, and the first device is a communication device based on environmental energy.

2. The method of claim 1, wherein the first frame structure is different from the conventional frame structure in at least one of:
an address field in the first frame structure is different from an address field in the conventional frame structure;
a sequence control field in the first frame structure is different from a sequence control field in the conventional frame structure;
the first frame structure does not comprise the sequence control field compared to the conventional frame structure; and
a frame control field in the first frame structure is different from a frame control field in the conventional frame structure.

3. The method of claim 2, wherein the address field in the first frame structure is different from the address field in the conventional frame structure in at least one of:
the first frame structure does not comprise a third address field and a fourth address field compared to the conventional frame structure; and
a first address field and a second address field in the first frame structure are different from a first address field and a second address field in the conventional frame structure respectively.

4. The method of claim 3, wherein in case that the MAC frame is a downlink frame, in the first frame structure,
the first address field is used to indicate a receiver address, and a value of the first address field is an associated identifier (AID), an identifier (ID) or a truncated ID of a receiver; and
the second address field is used to indicate a transmitter address, and a value of the second address field is an address identifier, a MAC address, a truncated MAC address, a basic service set identifier (BSSID) or a truncated BSSID of a transmitter.

5. The method of claim 4, wherein the first address field occupies two bytes or one byte and the second address field occupies two bytes or one byte.

6. The method of claim 3, wherein in case that the MAC frame is an uplink frame, in the first frame structure,
the first address field is used to indicate a receiver address, and a value of the first address field is an address identifier, a MAC address, a truncated MAC address, a basic service set identifier (BSSID) or a truncated BSSID of a receiver; and
the second address field is used to indicate a transmitter address, and a value of the second address field is an associated identifier (AID), an identifier (ID) or a truncated ID of the transmitter.

7. The method of claim 6, wherein the first address field occupies two bytes or one byte and the second address field occupies two bytes or one byte.

8. The method of any one of claims 2 to 7, wherein in case that the MAC frame is a downlink frame, the first frame structure does not comprise the sequence control field.

9. The method of any one of claims 2 to 7, wherein in case that the MAC frame is an uplink frame, the first frame structure comprises the sequence control field.

10. The method of claim 9, wherein N1 bit in the sequence control field is used to indicate a sequence number and/or N2 bit in the sequence control field is used to indicate a segment number.

11. The method of claim 10, wherein
N1 > 1 and N2 = 0, the sequence control field is used only to indicate the sequence number;
N1 = 0 and N2 > 0, the sequence control field is used only to indicate the fragment number; or,
N1 > 1 and N2 > 0, the sequence control field is used to indicate the sequence number and the fragment number.

12. The method of claim 10 or 11, wherein,
a value of N1 is less than 12; and/or
a value of N2 is less than 4; and/or
a value of a sum of N1 and N2 is less than 16.

13. The method of any one of claims 2 to 12, wherein in the first frame structure, the frame control field comprises a protocol version subfield;
the protocol version subfield is used to indicate whether a direction of the MAC frame is the uplink frame or the downlink frame;
the protocol version subfield is used to indicate a device type of the first device;
the protocol version subfield is used to indicate an energization type of the first device; or,
the protocol version subfield is used to indicate a frame structure of the MAC frame.

14. The method of any one of claims 2 to 13, wherein in the first frame structure, the frame control field comprises a type subfield and/or a subtype subfield;
the type subfield is used to indicate a frame type of the MAC frame; and
the subtype subfield is used to indicate a frame subtype of the MAC frame.

15. The method of claim 14, wherein
in case that the MAC frame is a downlink frame, the type subfield occupies N3 bit and/or the subtype subfield occupies N4 bit; and
in case that the MAC frame is an uplink frame, the type subfield occupies N5 bit and/or the subtype subfield occupies N6 bit;
wherein a value of N3 is different from a value of N5; and/or a value of N4 is different from a value of N6.

16. The method of claim 15, wherein
the value of N3 is less than the value of N5; and/or the value of N4 is smaller than the value of N6.

17. The method of any one of claims 2 to 16, wherein in the first frame structure,
the frame control field does not comprise to distribution system (DS) subfield and/or from DS subfield; or,
the frame control field comprises the to DS subfield, the from DS subfield and/or a first subfield for indicating a direction of the MAC frame;
wherein the to DS subfield is used to indicate whether the MAC frame is a frame sent by a basic service set (BSS) to a DS, the from DS subfield is used to indicate whether the MAC frame is a frame sent by the DS to the BSS.

18. The method of claim 17, wherein in addition to the to DS subfield and/or the from DS subfield,
if there is an information field for determining a direction of the MAC frame in the first frame structure, the frame control field does not comprise the to DS subfield and/or the from DS subfield; and
if there is no information field for determining the direction of the MAC frame in the first frame structure, the frame control field comprises the to DS subfield, the from DS subfield and/or the first subfield.

19. The method of any one of claims 2 to 18, wherein in case that the MAC frame is the downlink frame, in the first frame structure, the frame control field does not comprise a more fragments subfield and/or a more data subfield, the more fragments subfield is used to indicate whether more fragments are to be transmitted, and the more data subfield is used to indicate whether more data is to be transmitted.

20. The method of any one of claims 2 to 18, wherein in case that the MAC frame is the uplink frame, in the first frame structure, the frame control field comprises a more fragments subfield and/or a more data subfield, the more fragments subfield is used to indicate whether more fragments are to be transmitted, and the more data subfield is used to indicate whether more data is to be transmitted.

21. The method of any one of claims 2 to 20, wherein in the first frame structure, the frame control field comprises an acknowledgement policy subfield for indicating whether feedback and/or a type of feedback is required.

22. The method of any one of claims 2 to 21, wherein in the first frame structure, the frame control field comprises at least one of a second subfield, a third subfield, a fourth subfield and a fifth subfield;
the second subfield is used to indicate a first time interval, wherein the first time interval is a time interval between a time of next uplink transmission and a time of current uplink transmission or a time interval between a time of transmission of a next trigger signal and a time of transmission of a current trigger signal;
the third subfield is used to indicate that the first device is in a sleep state and/or is not in a sleep state;
the fourth subfield is used to indicate that the first device has an uplink transmission to be transmitted and/or does not have an uplink transmission to be transmitted; and
the fifth subfield is used to instruct the first device to request an energy supply signal.

23. The method of any one of claims 2 to 22, wherein in the first frame structure,
the sequence control field is located within a MAC header and outside the frame control field; or
the sequence control field is located within the MAC header and within the frame control field.

24. The method of any one of claims 2 to 23, wherein in case that the MAC frame is a management frame or a control frame,
the first frame structure comprises a MAC header and a frame check sequence (FCS); or,
the first frame structure comprises the MAC header, a frame body, and the FCS.

25. The method of claim 24, wherein
a data sent or received by the first device is indicated by an information field in the MAC header; and/or,
the data sent or received by the first device is carried in the frame body as an information element.

26. The method of any one of claims 2 to 23, wherein in case that the MAC frame is a data frame,
the first frame structure comprises the MAC header, a frame body, and the FCS.

27. The method of claim 26, wherein the data sent or received by the first device is carried in the frame body.

28. A frame transmission device comprising:
a communication unit configured to send or receive a media access control (MAC) frame, wherein the MAC frame has a first frame structure, the first frame structure is different from a conventional frame structure, and the first device is a communication device based on environmental energy.

29. The device of claim 28, wherein the first frame structure is different from the conventional frame structure in at least one of:
an address field in the first frame structure is different from an address field in the conventional frame structure;
a sequence control field in the first frame structure is different from a sequence control field in the conventional frame structure;
the first frame structure does not comprise the sequence control field compared to the conventional frame structure; and
a frame control field in the first frame structure is different from a frame control field in the conventional frame structure.

30. A communication device comprising a processor and a memory for storing a computer program, wherein the processor is configured for invoking and executing the computer program stored in the memory to cause the terminal device to perform the method of any one of claims 1 to 27.

31. A chip comprising a processor for invoking and executing a computer program from a memory to enable a device on which the chip is mounted to perform the method of any one of claims 1 to 27.

32. A computer-readable storage medium for storing a computer program that causes a computer to perform the method of any one of claims 1 to 27.

33. A computer program product comprising computer program instructions enabling a computer to perform the method of any one of claims 1 to 27.

34. A computer program that enables a computer to perform the method of any one of claims 1 to 27.
